# EUROPEAN PATENT APPLICATION

(11) **EP 1 613 070 A2**
(43) Date of publication of application: **04.01.2006**
(21) Application number: 05253953.3
(22) Date of filing: 24.06.2005
(51) Int. Cl.: H04N 5/64

(54) **Liquid crystal display device**

(30) Priority: 30.06.2004 JP 2004193520
(71) Applicant: ORION ELECTRIC CO., Ltd., Takefu-City, Fukui 915-8555 (JP)
(72) Inventor: Nishida, Kazufumi, c/o Orion Electric Co., Ltd., Takefu-city Fukui 915-8555 (JP)
(74) Representative: Paget, Hugh Charles Edward

(57) **Abstract**

The invention provides a liquid crystal display device capable of mounting a recording/playing device of a DVD etc. on a casing of the liquid crystal display device easily at low cost, the device capable of having the recording/playing device and recording/playing device manipulation buttons etc. mounted easily thereto by changing a part of the design of a mounting cover attached to a casing of the liquid crystal display device. A mounting cover 14 for fixing an LCD device 13 inside a casing 5 of a liquid crystal television receiver 1 is provided, the cover 14 provided with LCD manipulation buttons 10 for manipulating the LCD device 13. Upon mounting a recording/playing device 30 for recording data to and playing data on an optical disk in the casing 5, the mounting cover 14 can be used commonly but with the position for mounting recording/playing device manipulation buttons 33 for manipulating the recording/playing device 30 on the mounting cover 14 being different from the position for mounting LCD manipulation buttons 10. Thus, recording/playing device manipulation buttons 33 can be attached to the mounting cover 14 used commonly for fixing the LCD device 13, and the cost of the display device can be cut down.

## Description

### BACKGROUND OF THE INVENTION

### Field of the invention

The present invention relates to a liquid crystal display device for displaying images, such as a liquid crystal television receiver, and more specifically, to a liquid crystal display device capable of mounting a recording/playing device for recording and playing data on a recording medium such as an optical disk like a DVD (digital versatile disk).

### Description of the related art

In recent years, there have been developed a liquid crystal display device functioning as a television receiver equipped with a recording/playing device for recording and playing data on an optical disk such as a DVD that enables a user to view both the data on an optical disk and a television broadcast on a single television receiver. Such prior art techniques are disclosed in Japanese Patent Application Laid-Open Publication No. 2001-307470 (patent document 1), Japanese Patent Application Laid-Open Publication No. 2001-332074 (patent document 2) and Japanese Patent Application Laid-Open Publication No. H09-182000 (patent document 3).

According to the prior art techniques mentioned above, a single electronic device is equipped with both the function of a television receiver and the function of a recording/playing device of an optical disk such as DVD, allowing the user to view both the data on a DVD and a television broadcast program. However, if a user wishes to mount an optical disk recording/playing device on an existing television receiver at a later timing, it may be possible to mount the device if there is enough space inside the casing of the electronic device to mount the recording/playing device, but in practice, it was difficult to mount and lay out manipulation buttons and circuit boards for controlling the recording/playing device accompanying the mounting of the recording/playing device.

### SUMMARY OF THE INVENTION

The present invention aims at solving the above-mentioned problems of the prior art, by providing at low cost a liquid crystal display device capable of providing recording/playing device manipulation buttons for manipulating the recording/playing device on the display device by changing only a portion of the design of a mounting cover attached to the casing of the liquid crystal display device upon mounting a recording/playing device for a DVD and the like inside the casing of the liquid crystal display device.

The first aspect of the present invention relates to a liquid crystal display device comprising a mounting cover for fixing an LCD device inside a casing of the liquid crystal display device, and an LCD manipulation button for manipulating the LCD device provided on the mounting cover, wherein upon mounting inside the casing a recording/playing device for recording and playing data on an optical disk, the mounting cover is used commonly with a position for providing a recording/playing device manipulation button for manipulating the recording/playing device being different from a position for providing the LCD manipulation button.

According to the first aspect of the present invention, upon mounting a recording/playing device inside the casing of a liquid crystal display device, the mounting cover can be used commonly except that the position for placing the recording/playing device manipulation button is different from the position for placing the LCD manipulation button.

The second aspect of the present invention relates to the liquid crystal display device according to the first aspect, wherein the LCD manipulation button is provided at an upper face of the casing at substantially a longitudinal center thereof.

According to the second aspect of the invention, the operator of the liquid crystal display device can manipulate the LCD device easily from any direction, since the LCD manipulation button is placed at the upper face of the casing at substantially the longitudinal center of the casing.

The third aspect of the present invention relates to the liquid crystal display device according to the second aspect, wherein upon mounting the recording/playing device inside the casing, the LCD manipulation button and the recording/playing device manipulation button are provided at the upper face of the casing at substantially the longitudinal center thereof.

According to the third aspect of the invention, when the recording/playing device is mounted inside the casing of the liquid crystal display device, the LCD manipulation button and the recording/playing device manipulation button are provided at the upper face of the casing at substantially the longitudinal center thereof, so that the manipulation of the LCD device and the recording/playing device can be performed easily from any direction.

As described, according to the first aspect of the present invention related to a liquid crystal display device comprising a mounting cover for fixing an LCD device inside a casing of the liquid crystal display device, and an LCD manipulation button for manipulating the LCD device provided on the mounting cover, wherein upon mounting inside the casing a recording/playing device for recording and playing data on an optical disk, the mounting cover is used commonly with a position for providing a recording/playing device manipulation button for manipulating the recording/playing device being different from a position for providing the LCD manipulation button, the mounting cover can be used commonly to thereby reduce the number of components constituting the liquid crystal display device. Thus, the present invention enables to provide a liquid crystal display device at low cost.

According to the second aspect of the present invention related to the liquid crystal display device of the first aspect wherein the LCD manipulation button is provided at an upper face of the casing at substantially a longitudinal center thereof, the operator of the liquid crystal display device can manipulate the LCD device easily from any direction. Therefore, the present liquid crystal display device has superior operability.

According to the third aspect of the present invention related to the liquid crystal display device of the second aspect wherein upon mounting the recording/playing device inside the casing, the LCD manipulation button and the recording/playing device manipulation button are provided at the upper face of the casing at substantially the longitudinal center thereof, the liquid crystal display device having the recording/playing device mounted thereto can be manipulated easily from any direction using the recording/playing device manipulation button and the LCD manipulation button. Therefore, the present liquid crystal display device has superior operability.

### BRIEF DESCRIPTION OF THE DRAWINGS

FIG. 1 is a front view showing a liquid crystal television receiver according to the present invention;
FIG. 2 is a left side view showing the above-mentioned liquid crystal television receiver;
FIG. 3 is a plan view showing the above-mentioned liquid crystal television receiver with LCD manipulation buttons;
FIG. 4 is a rear view showing the above-mentioned liquid crystal television receiver with the back cabinet taken away;
FIG. 5 is a plan view showing the above-mentioned liquid crystal television receiver with a portion of the casing removed;
FIG. 6 is a left side view showing the above-mentioned liquid crystal television receiver with the rear cabinet attached;
FIG. 7 is a plan view showing the above-mentioned liquid crystal television receiver equipped with LCD manipulation buttons and recording/playing device manipulation buttons;
FIG. 8 is a plan view showing the above-mentioned liquid crystal television receiver with a portion of the casing taken away; and
FIG. 9 is a rear view showing the above-mentioned liquid crystal television receiver equipped with a recording/playing device with the rear cabinet removed.

### DETAILED DESCRIPTION OF THE PREFERRED EMBODIMENTS

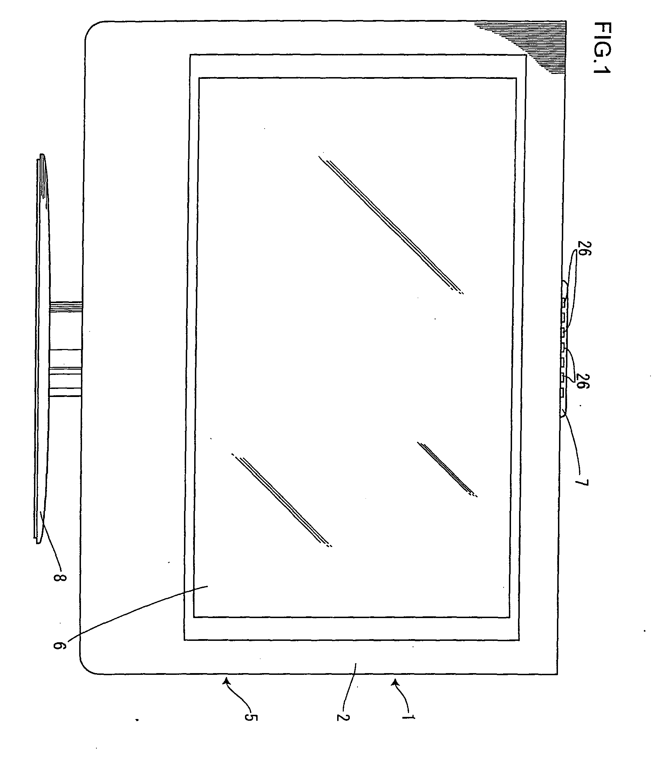

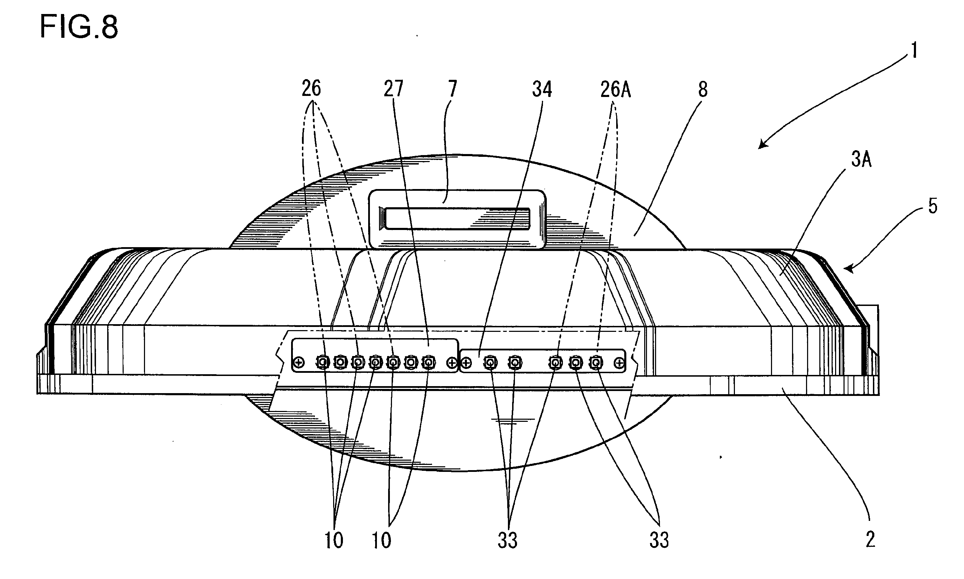

Now, the preferred embodiments for carrying out the present invention will be described with reference to FIGS. 1 through 9. The technical scope of the present invention is not restricted to the language used in the embodiments, and is extended to the range in which a person skilled in the art could easily substitute based on the present disclosure.

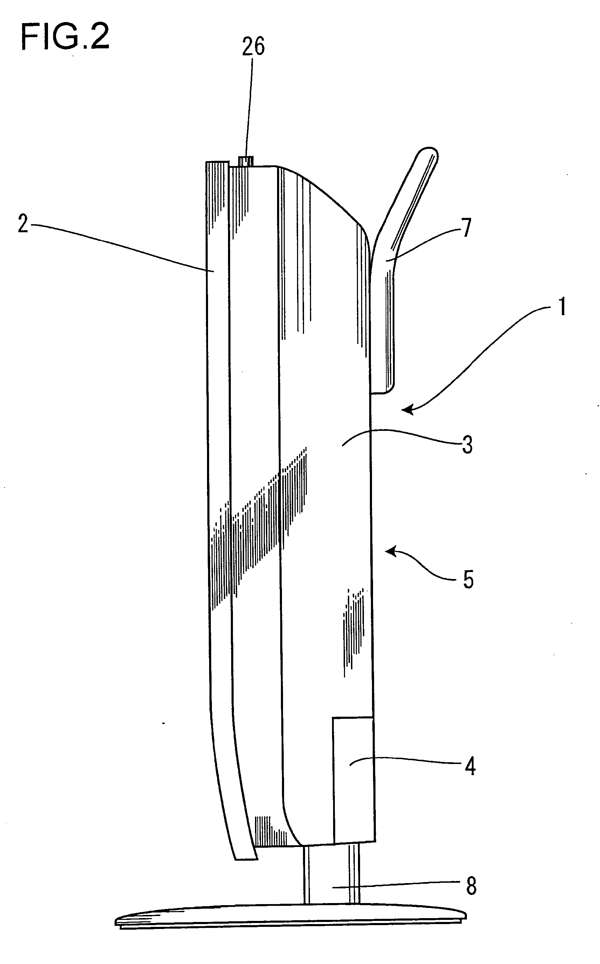

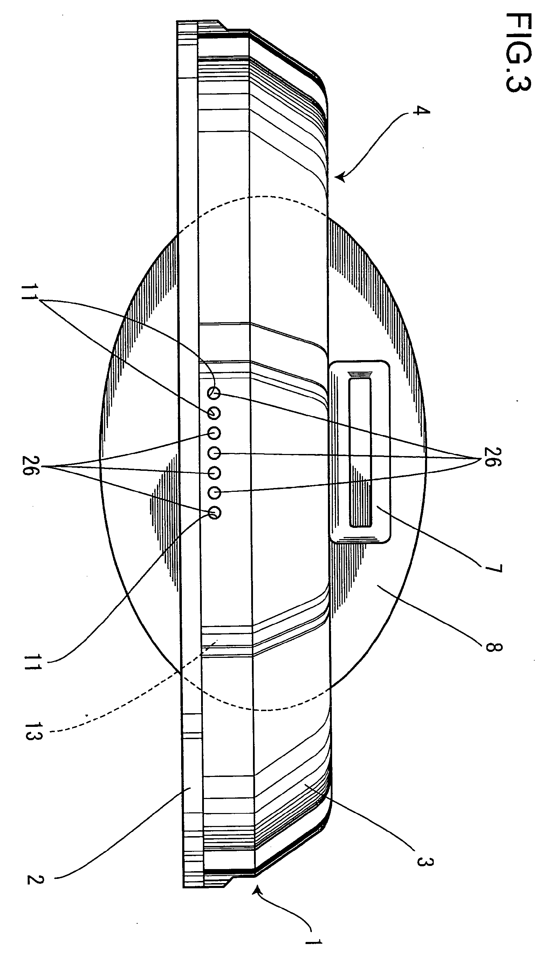

FIG. 1 is a front view of a liquid crystal display device capable of receiving and displaying a television broadcast program and the like, FIG. 2 is a left side view thereof, and FIG. 3 is a plan view thereof. The liquid crystal display device according to the present embodiment is a liquid crystal television receiver 1.

The liquid crystal television receiver 1 is composed of a casing 5 including a front cabinet 2, a back cabinet 3 and a back cover 4 that can be separated. In a center front area of the front cabinet 2 is disposed a display unit 6 for displaying images.

A handle 7 is screwed on the upper portion of the back cabinet 3 for moving the liquid crystal television receiver 1. A stand 8 for mounting the liquid crystal television receiver 1 is screwed on the bottom surface of the back cabinet 3 at the longitudinal center thereof.

At the longitudinal center of the upper portion of the back cabinet 3 are provided manipulation buttons 10 of the liquid crystal display (LCD) for allowing various manipulations of the display unit 6 of the LCD device 13, as illustrated in FIG. 3. These LCD manipulation buttons 10 are provided so as to protrude upward via through holes 11 provided on the upper portion of the back cabinet 3.

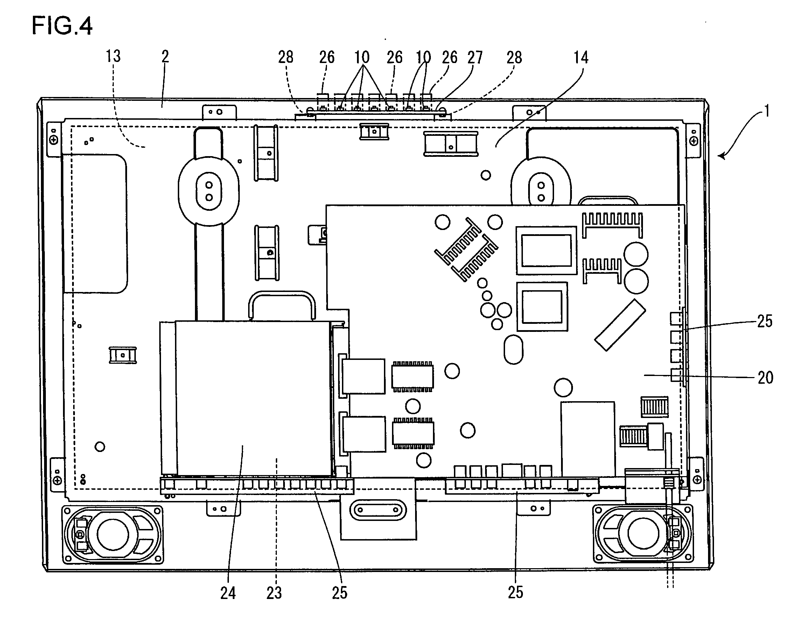

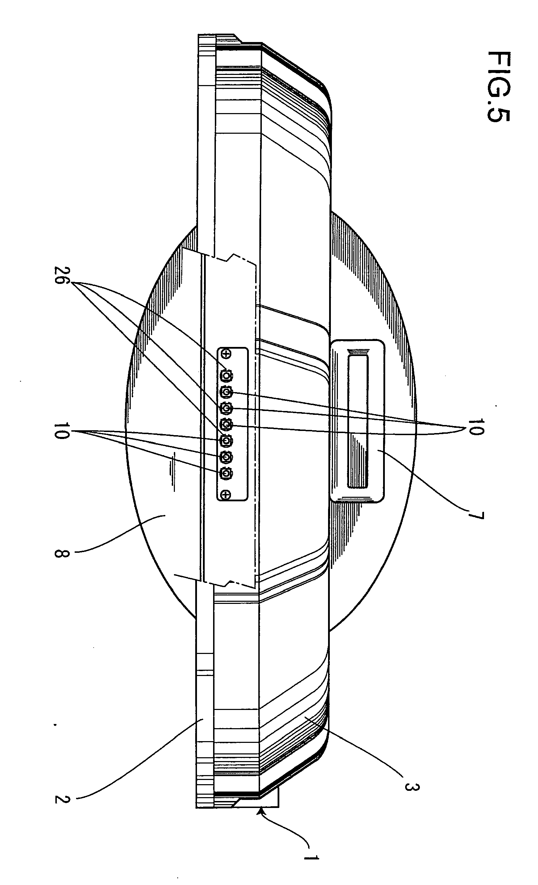

Next, various components and devices provided inside the casing 5 of the liquid crystal television receiver 1 are described with reference to FIGS. 4 and 5. FIG. 4 is a drawing showing the state in which the back cabinet 3 and back cover 4 are removed to show the interior of the casing 5 of the liquid crystal television receiver 1, and inside the casing 5 is an LCD device 13 equipped with a display unit 6 disposed in the front cabinet 2, the device 13 being fixed to the front cabinet 2 by a mounting cover 14 via a screw or the like.

Furthermore, on the rear side of the mounting cover 14, as shown in FIG. 4, there are provided a television board 20 and a digital board 23 for controlling the LCD device 13 or the like, a digital board shield 24 covering the digital board 23, and jack mounting plates 25, 25 and 25 for mounting multiple jacks. On the upper portion of the mounting cover 14, there are provided through holes 11 on the back cabinet 3 which are positioned to correspond to the LCD manipulation buttons 10, and through the through holes 11, button covers 26 provided to the LCD manipulation buttons 10 are exposed to the exterior. The LCD manipulation buttons 10 are integrally mounted to the television control board 27, as shown in FIGS. 3 through 5, and screwed onto mounting holes 28 provided to the mounting cover 14 through the television control board 27.

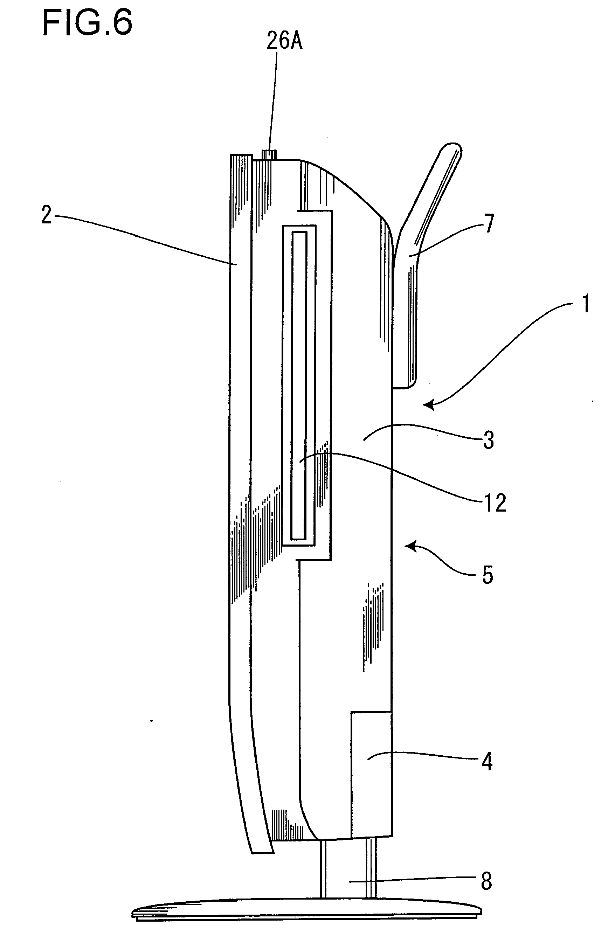

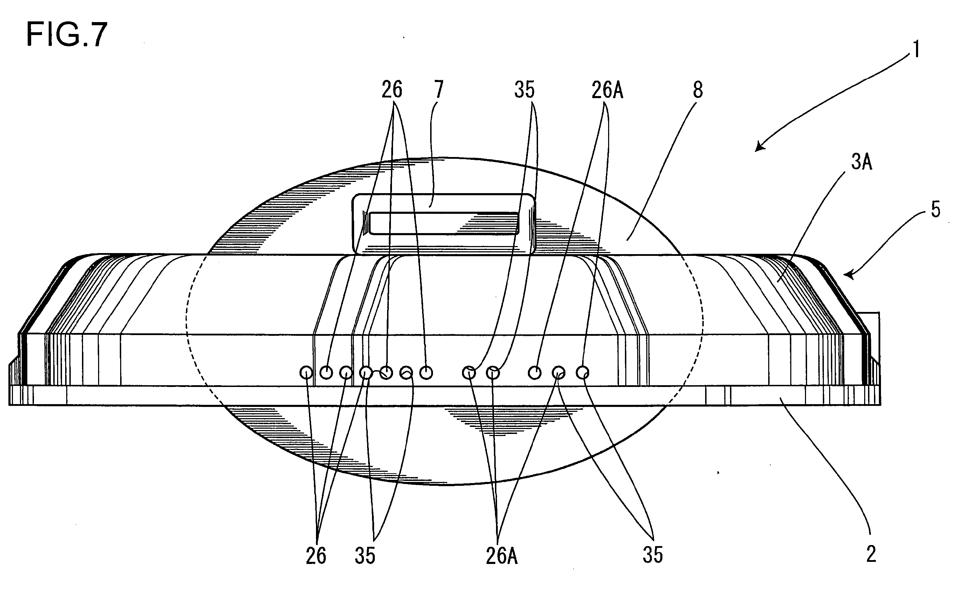

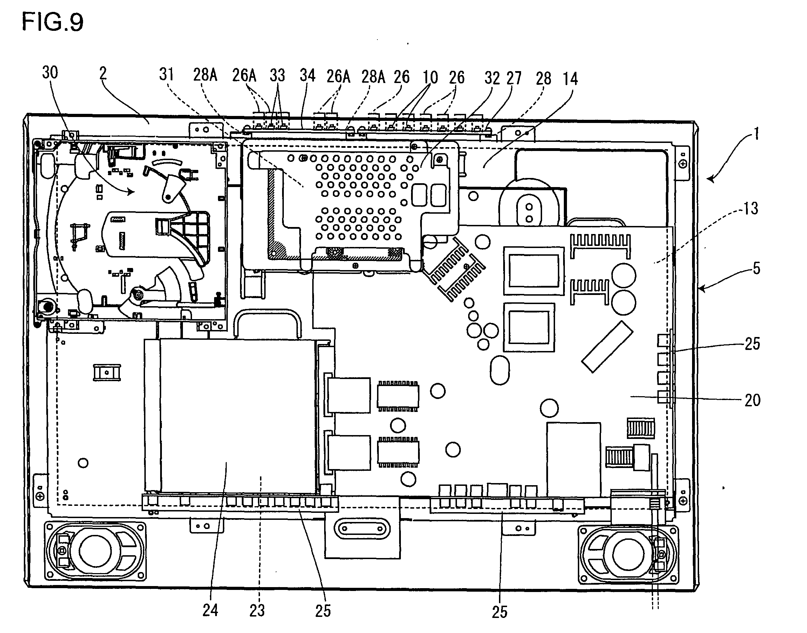

Next, the arrangement for mounting to the casing 5 of the liquid crystal television receiver 1 a recording/playing device capable of recording and reproducing data on a recording medium such as an optical disk is described with reference to FIGS. 6 through 9. FIG. 9 shows a state in which a recording/playing device 30 is mounted to the casing 5 of the liquid crystal television receiver 1. As shown, the arrangement of the liquid crystal television receiver 1 according to this arrangement is substantially the same as that mentioned above, so the same components are denoted with the same reference numbers and detailed descriptions thereof are omitted. When providing a recording/playing device 30 to the casing 5 of the liquid crystal television receiver 1, at least a recording/playing device 30, a recording/playing device board 31 for controlling the recording/playing device 30 and a board shield 32 covering the recording/playing device board 31 are additionally mounted to the interior of the casing 5, as shown in FIG. 9. Further, holes 28A, 28A, 28A and 28A are provided to the mounting cover 14 instead of the mounting holes 28 and 28, as shown in FIG. 9. The LCD manipulation buttons 10 and recording/playing device manipulation buttons 33 for manipulating the recording/playing device 30 are secured to holes 28A, 28A, 28A and 28A via screw engagement and the like. In this case, similar to the mounting of the LCD manipulation buttons 10 to the mounting holes 28, the LCD manipulation buttons 10 and the recording/playing device buttons 32 are provided integrally on the television control board 27 and the recording/playing device control board 34, respectively, and the buttons are screw engaged to the mounting holes 28A provided on the mounting cover 14 through the television control board 27 and the recording/playing device control board 34. Further, the LCD manipulation buttons 10 and the recording/playing device buttons 33 are covered by button covers 26 provided on the LCD manipulation button 10 and button covers 26A provided on the recording/playing device buttons 33, wherein these button covers 26 and 26A are exposed through the openings 35 to the exterior. Thus, when a recording/playing device 30 is mounted inside the casing 5 of the liquid crystal television receiver 1, a corresponding recording/playing device board 31 is fixed to the interior of the casing 5, and a mounting cover 14 with substantially the same shape but having holes 28A instead of mounting holes 28 is used commonly. In this case, as shown in FIG. 7, a rear cabinet 3A having openings 35 corresponding to the location of LCD manipulation buttons 10 and recording/playing device buttons 32 is used as the rear cabinet 3A. Furthermore, when replacing the back cabinet 3 corresponding only to the LCD manipulation button 10 with the rear cabinet 3A corresponding both to the LCD manipulation button 10 and the recording/playing device buttons 32, the rear cabinet 3A can be manufactured at low cost since the rear cabinet 3A can be formed easily using a nesting or the like in a mold (not shown) used to form the back cabinet 3. Furthermore, when mounting a recording/playing device 30 in the casing 5 of the liquid crystal television receiver 1, the rear cabinet 3A is provided with an opening 12 for inserting an optical disk to the recording/playing device 30, as shown in FIG. 6.

As described, the liquid crystal television receiver 1 as the liquid crystal display device according to the present embodiment is provided with a mounting cover 14 for fixing an LCD device 13 inside the casing 5 of the liquid crystal television receiver 1, the mounting cover 14 equipped with LCD manipulation buttons 10 for controlling the LCD device 13, wherein when mounting a recording/playing device 30 for recording and playing data on an optical disk to the interior of the casing 5, recording/playing device manipulation buttons 33 are also provided on the mounting cover 14. Upon mounting a recording/playing device 30 to the liquid crystal television receiver 1, the mounting cover 14 is used commonly except that the mounting positions of the recording/playing device manipulation buttons 33 for controlling the recording/playing device 30 are different from the mounting positions of the LCD manipulation buttons 10, so that the number of components constituting the liquid crystal television receiver 1 is reduced and the cost for manufacturing the television receiver 1 can thereby be cut down. Since the LCD manipulation buttons 10 are provided substantially at the longitudinal center of the upper face of the casing 5, the operator of the liquid crystal television receiver 1 can manipulate the LCD device 13 easily from any direction through the LCD manipulation buttons 10, since the LCD manipulation buttons 10 are provided at the upper face of the casing 14 and at substantially the longitudinal center thereof. Thus, the television receiver 1 has superior operability. Furthermore, when a recording/playing device 30 is mounted inside the casing 14, both the LCD manipulation buttons 10 and recording/playing device manipulation buttons 33 are provided at the upper face of the casing 14 at substantially the longitudinal center thereof, so in addition to the LCD device 13, the recording/playing device 30 mounted on the liquid crystal television receiver 1 can be manipulated easily from any direction since the LCD manipulation buttons 10 for manipulating the television to show television broadcasts and the recording/playing device manipulation buttons 33 for manipulating the recording/playing device 30 are provided at the upper face of the casing 14 at substantially the longitudinal center thereof. Therefore, the present television receiver 1 has superior operability.

The term "recording/playing" used in the above description refers both to recording or playing (reproducing) data and recording and playing data. One effect of the present embodiment is that since the LCD manipulation buttons 10 of FIG. 3 or the LCD manipulation buttons 10 and the recording/playing device manipulation buttons 33 of FIG. 7 are provided on the upper area of the stand placed on a floor or the like, so that even if the LCD manipulation buttons 10 or the recording/playing device manipulation buttons 33 are pressed from above with relatively strong force, the liquid crystal television receiver 1 mounted on the stand will not loose balance and tilt over, but can maintain a stable position on the floor.

## Claims

1. A liquid crystal display device comprising a mounting cover for fixing an LCD device inside a casing of the liquid crystal display device, and an LCD manipulation button for manipulating the LCD device provided on the mounting cover, wherein upon mounting inside the casing a recording/playing device for recording and playing data on an optical disk, said mounting cover is used commonly with a position for providing a recording/playing device manipulation button for manipulating the recording/playing device being different from a position for providing the LCD manipulation button.

2. The liquid crystal display device according to claim 1, wherein the LCD manipulation button is provided at an upper face of the casing at substantially a longitudinal center thereof.

3. The liquid crystal display device according to claim 2, wherein upon mounting the recording/playing device inside the casing, the LCD manipulation button and the recording/playing device manipulation button are provided at the upper face of the casing at substantially the longitudinal center thereof.
